# EUROPÄISCHE PATENTSCHRIFT

(11) **EP 4 536 994 B1**
(45) Veröffentlichungstag und Bekanntmachung des Hinweises auf die Patenterteilung: **02.12.2026**
(21) Anmeldenummer: 22741808.4
(22) Anmeldetag: 21.07.2022
(51) Int. Cl.: F16H 3/54, F16H 37/04, F16H 61/02, F16D 7/04, F16D 41/066

(54) **GETRIEBEANORDNUNG FÜR EINEN BREMSAKTUATOR SOWIE BREMSAKTUATOR**
GEARING ASSEMBLY FOR A BRAKE ACTUATOR, AND BRAKE ACTUATOR
ENSEMBLE ENGRENAGE POUR ACTIONNEUR DE FREIN, ET ACTIONNEUR DE FREIN

(30) Priorität: 13.06.2022 EP 22178777
(43) Veröffentlichungstag der Anmeldung: 16.04.2025
(73) Patentinhaber: IMS Gear SE & Co. KGaA, 78166 Donaueschingen (DE)
(72) Erfinder: GRULER, Fabian, 78554 Aixheim (DE); SYNOVZIK, Wilfried, 78183 Hüfingen (DE)
(74) Vertreter: Westphal, Mussgnug & Partner Patentanwälte mbB
(86) Internationale Anmeldenummer: PCT/EP2022/070476
(87) Internationale Veröffentlichungsnummer: WO 2023/241816

(56) Entgegenhaltungen:
- EP-A1- 3 051 172
- EP-A2- 0 372 219
- EP-B1- 0 694 132
- THOMAS BELZ: "Varianten von Mehrgang-Planetengetrieben", 8 March 2016 (2016-03-08), XP055257458, Retrieved from the Internet <URL:https://register.epo.org/application?documentId=EYPWMGE67270DSU&appnumber=EP13756488&showPdfPage=all> [retrieved on 20160311]

## Beschreibung

Die Erfindung betrifft eine Getriebeanordnung für einen Bremsaktuator sowie einen Bremsaktuator.

An Bremsaktuatoren werden, insbesondere im Kraftfahrzeugbereich, hohe Dynamikanforderungen gestellt. Um diese Dynamikanforderungen erfüllen zu können, werden in elektromechanischen Bremsaktuatoren bislang nieder untersetzte Getriebe mit bürstenlosen Gleichstrom-Motoren (sogenannte Brushless DC-Motoren oder BLDC-Motoren) als Antriebsmotoren verbaut. Diese Motoren sind jedoch sehr kostenintensiv, weshalb nach Alternativkonzepten gesucht wird.

Eine Kostensenkung kann durch den Einsatz herkömmlicher, also bürstenbehafteter Gleichstrommotoren (sogenannten DC-Motoren) als Antriebsmotoren erreicht werden. Aufgrund der relativ geringen Motorabtriebsdrehmomente, die ein derartiger Antriebsmotor bereitstellt, muss ein nachgeschaltetes Getriebe eine entsprechend hohe Untersetzung bereitstellen um die geforderten Verstellkräfte zu erreichen. Die hohe Untersetzung geht allerdings zu Lasten der Verstellzeit. Insbesondere die Zeit, die benötigt wird, um die Bremse zu schließen (die sogenannte Time to Lock, TTL) ist essenziell für die hoch dynamischen Bremssysteme.

Als druckschriftlicher Stand der Technik werden die EP 0 694 132 B1, die EP 0 372 219 A2 und die EP 051 172 A1 genannt. Als Stand der Technik wird außerdem genannt: Thomas Belz: "Varianten von Mehrgang-Planetengetrieben", 8. März 2016, XP055257458, gefunden im Internet URL:https://register.epo.org/application?documentId=EYPWMGE67270DSU&appnumber=EP13756488&showPdfPage=all [gefunden am 11.03.2016].

Dabei offenbart die EP0694132B1 eine Getriebeanordnung, die unter den Wortlaut des Oberbegriffs des Anspruchs 1 fällt.

Der Erfindung liegt daher die Aufgabe zugrunde, eine Getriebeanordnung bereitzustellen, mit der einerseits die geforderten Verstellkräfte erreicht werden können, die andererseits eine geringe Time to Lock erreicht werden kann, und die darüber hinaus einfach und kostengünstig herstellbar ist. Insbesondere sollte die Getriebeanordnung so kostengünstig herstellbar sein, dass der durch die Verwendung eines DC-Motors erreichte Kostenvorteil nicht durch höhere Herstellkosten der Getriebeanordnung kompensiert wird.

Der Erfindung liegt außerdem die Aufgabe zugrunde, einen Bremsaktuator bereitzustellen, der kostengünstig herstellbar ist, und die geforderten Verstellkräfte bei einer gleichzeitig geringen Time to Lock bereitstellt.

Die Aufgabe wird erfindungsgemäß gelöst durch eine Getriebeanordnung mit den Merkmalen des Patentanspruchs 1 sowie einen Bremsaktuator mit den Merkmalen des Patentanspruchs 10. Vorteilhafte Ausgestaltungen und Weiterbildungen der Erfindung sind in den abhängigen Ansprüchen angegeben.

Eine erfindungsgemäße Getriebeanordnung für einen Bremsaktuator umfasst unter anderem in Antriebselement, ein erstes Abtriebselement, ein zweites Abtriebselement, und ein Getriebeausgangselement, wobei die Getriebeanordnung zwei verschiedene Übersetzungsverhältnisse aufweist und so konfiguriert ist, dass das erste Abtriebselement im Betrieb eine höhere Drehzahl und ein geringeres Drehmoment als das zweite Abtriebselement aufweist und dass das erste Abtriebselement und das zweite Abtriebselement derart mit dem Antriebselement gekoppelt sind, dass das erste Abtriebselement und das zweite Abtriebselement dieselbe Drehrichtung aufweisen.

Dadurch kann im Betrieb der Getriebeanordnung an dem ersten Abtriebselement eine Drehzahl und ein Drehmoment abgegriffen werden, die sich jeweils von der Drehzahl und dem Drehmoment, die an dem zweiten Abtriebselement abgreifbar sind, unterscheiden.

Bei der erfindungsgemäßen Getriebeanordnung ist ferner das erste Abtriebselement durch eine erste Kupplung, die einen ersten Antriebskörper und einen ersten Abtriebskörper umfasst, mit dem Getriebeausgangselement koppelbar. Das zweite Abtriebselement ist durch eine zweite Kupplung, die einen zweiten Antriebskörper un einen zweiten Abtriebskörper umfasst und als drehrichtungsbetätigte Kupplung ausgebildet ist, mit dem Getriebeausgangselement koppelbar. Das Getriebeausgangselement kann beispielsweise mit einer Bremsbacke in Wirkverbindung stehen. Dazu kann das Getriebeausgangselement eine Keilverzahnung aufweisen.

Erfindungsgemäß ist die erste Kupplung als drehmomentbetätigte Kupplung ausgebildet. Unter einer drehmomentbetätigten Kupplung wird hier und im Folgenden vorzugsweise eine Kupplung verstanden, die in Abhängigkeit des zu übertragenden Drehmoments zwei Körper miteinander koppelt oder voneinander entkoppelt. Die erste Kupplung der hier beschriebenen Getriebeanordnung ist vorzugsweise derart konfiguriert, dass kleine Drehmomente bis zu einer bestimmten Drehmomentgrenze durch die Kupplung übertragbar sind. Unter einer drehrichtungsbetätigten Kupplung wird hier und im Folgenden vorzugsweise eine Kupplung verstanden, die in Abhängigkeit der zu übertragenden Drehrichtung zwei Körper nach dem Prinzip eines Freilaufs miteinander koppelt oder voneinander entkoppelt. Insbesondere kann eine derartige zweite Kupplung zwei mit unterschiedlicher Drehzahl in dieselbe Richtung drehende Körper voneinander entkoppeln.

Vorzugweise ist die zweite Kupplung als Freilauf, insbesondere als Rollenfreilauf oder Klemmkörperfreilauf, ausgebildet. Ein Rollenfreilauf weist vorzugsweise Rollkörper auf, die im entkoppelten Zustand abrollen und im gekoppelten Zustand von Klemmfedern ausgerückt werden. Dadurch kann ein verzögerungsfreier Schaltvorgang von der Kopplung des ersten Abtriebselements mit dem Getriebeausgangselement zur Kopplung des zweiten Abtriebselements mit dem Getriebeausgangselement realisiert werden.

Je nach einer an dem Getriebeausgangselement anliegenden Last und der Drehrichtung des ersten Abtriebselements und des zweiten Abtriebselements sind so entweder die Drehzahl und das Drehmoment des ersten Abtriebselements oder die Drehzahl und das Drehmoment des zweiten Abtriebselements auf das Getriebeausgangselement übertragbar. Damit kann das Übersetzungsverhältnis des Getriebeausgangselements zu dem Antriebselement in Abhängigkeit von der an dem Getriebeausgangselement anliegenden Last verändert werden.

Das erste Abtriebselement und das zweite Abtriebselement repräsentieren vorzugsweise zwei unterschiedliche Kraftflüsse und -pfade durch die Getriebeanordnung, die je nach Betriebszustand das Getriebeausgangselement miteinbeziehen können. Die erste Kupplung sowie die zweite Kupplung können dabei ein Verlegen, also ein Sperren, der Getriebeanordnung vermeiden. Die Getriebeanordnung ist so konfiguriert, dass das erste Abtriebselement im Betrieb eine höhere Drehzahl und ein geringeres Drehmoment als das zweite Abtriebselement aufweist. Das erste Abtriebselement und das zweite Abtriebselement sind derart mit dem Antriebselement gekoppelt, dass das erste Abtriebselement und das zweite Abtriebselement dieselbe Drehrichtung aufweisen.

Die Getriebeanordnung kann damit die folgenden Betriebszustände aufweisen:
In einem ersten möglichen Betriebszustand drehen sich das erste Abtriebselement und das zweite Abtriebselement in eine erste Drehrichtung. An dem Getriebeausgangselement liegt keine Last an oder eine Last an, die die Drehmomentgrenze der ersten Kupplung nicht übersteigt. Die erste Kupplung koppelt das Getriebeausgangselement mit dem ersten Abtriebselement. Die zweite Kupplung entkoppelt das Getriebeausgangselement von dem zweiten Abtriebselement und ermöglicht so ein "Überholen" des langsamer drehenden zweiten Abtriebselements durch das schneller drehende Getriebeausgangselement. Das Getriebeausgangselement weist die Drehzahl und das Drehmoment des ersten Abtriebselements auf. Dieser Betriebszustand kann beispielsweise auftreten, wenn eine mit dem Getriebeausgangselement in Wirkverbindung stehende Bremsbacke das Lüftspiel einer Bremse, also den Abstand bis zum Kontakt mit der Bremsscheibe durchfährt.

In einem zweiten möglichen Betriebszustand drehen sich das erste Abtriebselement und das zweite Abtriebselement ebenfalls in die erste Drehrichtung. An dem Getriebeausgangselement liegt eine Last an, die die Drehmomentgrenze der ersten Kupplung übersteigt. Die erste Kupplung entkoppelt das Getriebeausgangselement von dem ersten Abtriebselement. Nachdem die Drehzahl des Getriebeausgangselements mindestens bis auf die Drehzahl des zweiten Abtriebselements abgefallen ist, koppelt die zweite Kupplung das Getriebeausgangselement mit dem zweiten Abtriebselement. Das Getriebeausgangselement weist damit die Drehzahl und das Drehmoment des zweiten Abtriebselements auf. Dieser Betriebszustand kann beispielsweise auftreten, wenn die mit dem Getriebeausgangselement in Wirkverbindung stehende Bremsbacke an der Bremsscheibe anliegt und gegen die Bremsscheibe gedrückt wird.

In einem dritten möglichen Betriebszustand drehen sich das erste Abtriebselement und das zweite Abtriebselement in eine zweite, der ersten Drehrichtung entgegengesetzte Drehrichtung. An dem Getriebeausgangselement liegt keine Last an oder eine Last an, die die Drehmomentgrenze der ersten Kupplung nicht übersteigt. Die erste Kupplung könnte das Getriebeausgangselement von daher mit dem ersten Abtriebselement koppeln. Durch das Prinzip der drehrichtungsbetätigten zweiten Kupplung bedingt, kann die im Vergleich zur Drehzahl des zweiten Abtriebselements höhere Drehzahl des ersten Abtriebselements in der zweiten Drehrichtung zu einem Koppeln des Getriebeausgangselements mit dem zweiten Abtriebselement führen. In der Folge kann die drehmomentbetätigte erste Kupplung das Getriebeausgangselement von dem ersten Abtriebselement entkoppeln. Das Getriebeausgangselement weist die Drehzahl und das Drehmoment des zweiten Abtriebselements auf. Dieser Betriebszustand kann beispielsweise auftreten, wenn sich die mit dem Getriebeausgangselement in Wirkverbindung stehende Bremsbacke von der Bremsscheibe wegbewegt.

Erfindungsgemäß ist der erste Antriebskörper der ersten Kupplung drehfest mit dem ersten Abtriebselement verbunden. Der erste Antriebskörper kann, insbesondere in Umfangsrichtung, formschlüssig und/oder stoffschlüssig mit dem ersten Abtriebselement verbunden sein. Erfindungsgemäß ist der erste Antriebskörper durch ein Federelement gegen den ersten Abtriebskörper vorgespannt. Dadurch kann die erste Kupplung das Getriebeausgangselement mittels einer kraft- und/oder formschlüssigen Verbindung mit dem ersten Abtriebselement koppeln. Durch die Vorspannung kann die Drehmomentgrenze der ersten Kupplung eingestellt werden. Das Federelement ist vorzugsweise als Federscheibe ausgebildet.

Insbesondere kann der erste Abtriebskörper der ersten Kupplung durch das Getriebeausgangselement gebildet sein. Dadurch kann ein kompakter Aufbau und eine geringere Teileanzahl der Getriebeanordnung erreicht werden.

Insbesondere kann der erste Antriebskörper als Zahnscheibe ausgebildet sein und das Getriebeausgangselement auf einer der Zahnscheibe zugewandten Stirnfläche eine mit der Zahnscheibe in Eingriff bringbare Kontur aufweisen. Unter einer Zahnscheibe wird dabei vorzugsweise ein scheibenförmiges Element verstanden, das in axialer Richtung ein Zahnprofil aufweist. Durch eine derartige Anordnung kann die zur Kopplung des Antriebsteils mit dem Getriebeausgangselement erforderliche Federkraft bei gleichbleibender Drehmomentgrenze der ersten Kupplung reduziert werden.

In einer Weiterbildung der Erfindung umfasst die Getriebeanordnung ein Planetengetriebe mit einem Planetenträger, mindestens einem Planetenrad, das an dem Planetenträger angeordnet ist, und einem drehfest mit einer Sonnenwelle verbundenen Sonnenritzel, das mit dem mindestens einen Planetenrad kämmt. Dadurch kann eine große Übersetzung auf verhältnismäßig kleinem Bauraum realisiert werden. Zur Realisierung der Funktion eines Hohlrads kann ein Gehäuse der Getriebeanordnung eine Innenverzahnung aufweisen, mit der das mindestens eine Planetenrad kämmt.

Das zweite Abtriebselement kann durch den Planetenträger gebildet sein. Dadurch kann gegenüber dem Antriebselement eine Übersetzung des zweiten Abtriebselements ins Langsame erreicht werden.

Der zweite Antriebskörper kann durch den Planetenträger gebildet sein und/oder der zweite Abtriebskörper kann durch das Getriebeausgangselement gebildet sein. Dadurch kann ein kompakter Aufbau und eine geringere Teileanzahl der Getriebeanordnung erreicht werden. Wenn gleichzeitig der erste Abtriebskörper der ersten Kupplung durch das Getriebeausgangselement gebildet ist, sind der erste Abtriebskörper und der zweite Abtriebskörper identisch.

Das Getriebeausgangselement kann in einer zylindrischen Ausnehmung des Planetenträgers angeordnet sein. Vorzugsweise liegt die Rotationsachse des Getriebeausgangselements damit auf der Rotationsachse der Sonnenwelle. Die zylindrische Ausnehmung kann eine Mantelfläche aufweisen, die als antriebsseitige Wirkfläche der zweiten Kupplung ausgebildet sein kann. In diesem Fall können die Rollkörper oder Klemmkörper des Freilaufs unmittelbar mit der Mantelfläche zusammenwirken. Dies kann zu einer geringen Teileanzahl der Getriebeanordnung beitragen.

Das Antriebselement kann durch ein Antriebszahnrad gebildet werden, das mit einem auf der Sonnenwelle angeordneten Sonnenrad kämmt. Der Begriff des "Antriebszahnrads" umfasst dabei vorzugsweise auch die Antriebszahnradwelle, auf der das Zahnrad angeordnet sein kann. Das Sonnenrad ist vorzugsweise drehfest auf der Sonnenwelle angeordnet. Besonders bevorzugt weist das Antriebszahnrad einen kleineren Durchmesser als das Sonnenrad auf. Damit kann eine weitere Übersetzung ins Langsame realisiert werden.

Das Antriebszahnrad kann als Doppelzahnrad mit einem ersten Zahnkranz und einem mit dem ersten Zahnkranz drehfest verbundenen zweiten Zahnkranz ausgebildet sein, wobei der zweite Zahnkranz mit dem Sonnenrad kämmt. Vorzugsweise weist der zweite Zahnkranz einen kleineren Durchmesser als der erste Zahnkranz auf. Damit kann auf relativ kleinem Bauraum eine weitere Übersetzung ins Langsame erreicht werden. Insbesondere kann damit eine Voraussetzung für den Einsatz eines relativ hoch drehenden DC-Motors geschaffen werden. Der erste Zahnkranz kämmt vorzugsweise mit einem Ausgangsritzel eines antreibenden Elektromotors.

Insbesondere in der ersten Ausführungsform der Getriebeanordnung kann das erste Abtriebselement durch die Sonnenwelle gebildet sein. Dadurch kann ein geringeres Übersetzungsverhältnis des ersten Abtriebselements gegenüber des Antriebselements im Vergleich zu dem zweiten Abtriebselement erreicht werden, bei gleichzeitig kompaktem Aufbau der Getriebeanordnung.

Insbesondere in einer alternativen ersten Ausführungsform der Erfindung kann das erste Abtriebselement durch eine von der Sonnenwelle verschiedene Zusatzwelle gebildet sein.

Die Zusatzwelle kann gegenüber dem Antriebselement ein von der Sonnenwelle verschiedenes Übersetzungsverhältnis aufweisen. Verglichen mit der Sonnenwelle kann die Zusatzwelle gegenüber dem Antriebselement insbesondere ein geringeres Übersetzungsverhältnis aufweisen. Die Zusatzwelle kann dementsprechend eine höhere Drehzahl als die Sonnenwelle aufweisen. Mithilfe der Zusatzwelle kann so ein größerer Drehzahlunterschied zwischen dem ersten Abtriebselement und dem zweiten Abtriebselement realisiert werden. Bezogen auf den Bremsaktuator kann das Lüftspiel damit schneller durchfahren werden.

Vorzugsweise ist die Zusatzwelle mit einem Zusatzritzel drehfest verbunden, wobei das Zusatzritzel mit dem ersten Zahnkranz kämmt. Damit kann das von der Sonnenwelle verschiedene Übersetzungsverhältnis der Zusatzwelle gegenüber dem Antriebselement auf einfache sowie raum- und teilesparende Weise realisiert werden. Besonders bevorzugt ist das Zusatzritzel zusammen mit der Zusatzwelle einstückig ausgebildet. Das Zusatzritzel kann als Zahnsegment ausgeführt sein. Dies kann vorteilhaft sein, wenn das Zusatzritzel für einen Drehwinkel von weniger als 360° im Eingriff steht.

Besonders bevorzugt ist die Sonnenwelle als Hohlwelle ausgebildet und die Zusatzwelle in der Sonnenwelle angeordnet. Insbesondere kann die Zusatzwelle vollständig durch die Sonnenwelle hindurchgeführt sein, sodass die Zusatzwelle die Sonnenwelle entlang deren Rotationsachse in beide Richtungen überragt. Durch eine derartige Anordnung können die mit der Zusatzwelle verbundenen Vorteile auf kleinem Bauraum realisiert werden. Überdies kann der übrige Aufbau der Getriebeanordnung ähnlich zu dem Aufbau der Ausführungsform ohne Zusatzwelle ausgebildet sein. Dies kann insbesondere unter fertigungstechnischen Aspekten vorteilhaft sein.

Ein erfindungsgemäßer Bremsaktuator, der insbesondere für eine Betriebsbremse eines Kraftfahrzeugs, insbesondere eines PKW, ausgebildet ist, weist eine zuvor beschriebene Getriebeanordnung auf. Vorzugsweise umfasst der Bremsaktuator einen Elektromotor, besonders bevorzugt einen DC-Motor, der das Antriebselement antreibt.

Ausführungsbeispiele werden anhand der nachfolgenden Figuren erläutert. Es zeigt:
- Figur 1: eine schematische Ansicht eines Bremsaktuators mit einer Explosionsdarstellung eines ersten Ausführungsbeispiels einer Getriebeanordnung, welche unter den Wortlaut des Anspruchs 1 fällt,
- Figur 2: eine Schnittansicht des in Fig. 1 dargestellten Bremsaktuators mit eingezeichneter Schnittebene B-B,
- Figur 3: die Schnittansicht B-B des in Fig. 1 gezeigten Bremsaktuators gemäß der in Fig. 2 eingezeichneten Schnittebene,
- Figur 4: eine perspektivische Ansicht des Räderwerks eines zweiten Ausführungsbeispiels, wobei dieses Ausführungsbeispiel nicht unter den Wortlaut des Anspruchs 1 fällt,
- Figur 5: einen Teilschnitt durch das zweite Ausführungsbeispiel,
- Figur 6: eine schematische Ansicht eines Bremsaktuators mit einer Explosionsdarstellung eines dritten Ausführungsbeispiels, wobei dieses Ausführungsbeispiel nicht unter den Wortlaut des Anspruchs 1 fällt,
- Figur 7: eine Draufsicht des in Fig. 6 gezeigten Ausführungsbeispiels mit eingezeichneter Schnittebene A-A,
- Figur 8: die Schnittansicht A-A des in Fig. 6 gezeigten Bremsaktuators gemäß der in Fig. 7 eingezeichneten Schnittebene.

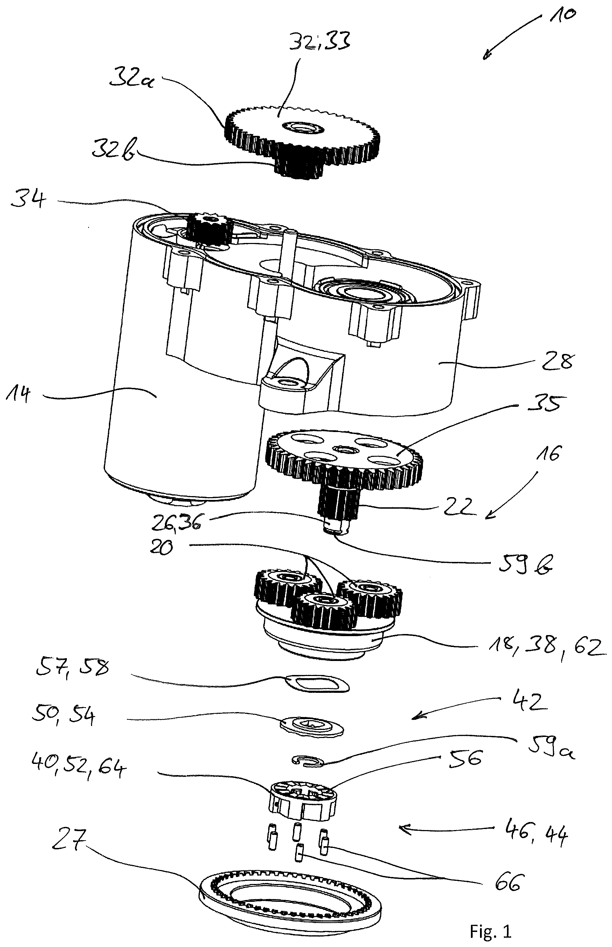

Die Figuren 1 bis 8 zeigen verschiedene Ansichten verschiedener Ausführungsbeispiele. Der Übersichtlichkeit halber werden nicht alle Bezugszeichen in jeder Figur verwendet. Für gleiche und funktionsgleiche Teile werden die gleichen Bezugszeichen verwendet.

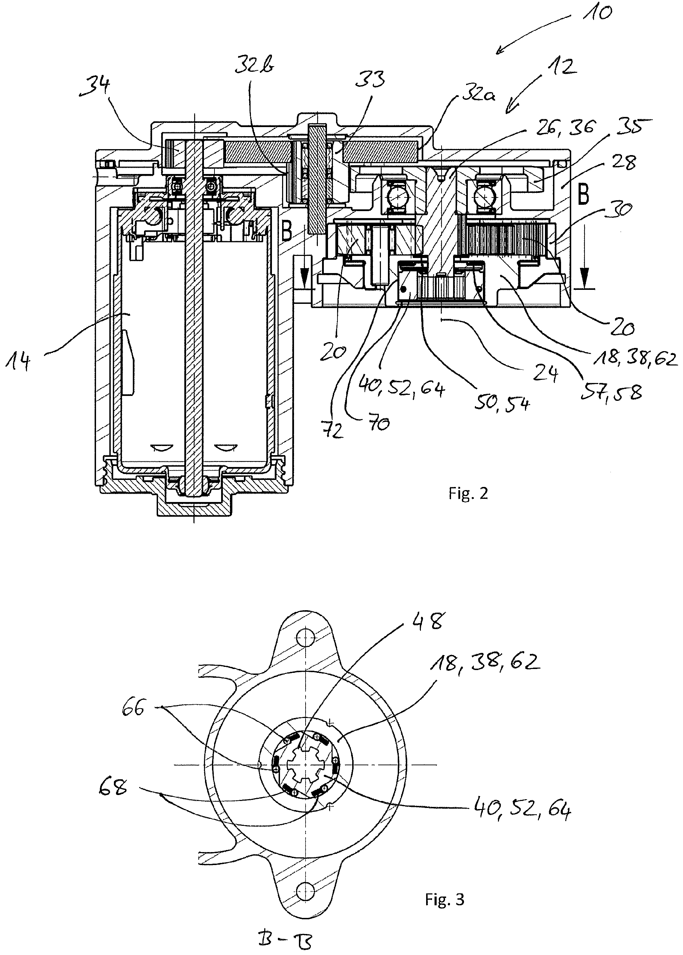

Figur 1 zeigt einen Bremsaktuator 10 für die Betriebsbremse eines Kraftfahrzeugs, insbesondere eines PKW. Figur 2 zeigt eine Schnittansicht dieses Bremsaktuators 10. Der Bremsaktuator 10 umfasst ein erstes Ausführungsbeispiel einer Getriebeanordnung 12 und einen DC-Motor 14. Die Getriebeanordnung 12 umfasst ein Planetengetriebe 16 mit einem Planetenträger 18, drei Planetenrädern 20, die an dem Planetenträger 18 angeordnet sind, und ein Sonnenritzel 22, das drehfest auf einer eine Rotationsachse 24 aufweisenden Sonnenwelle 26 angeordnet ist. Der Planetenträger 18 ist mit Hilfe eines Gleitlagers 27 gelagert. Im in Fig. 1 und 2 gezeigten Ausführungsbeispiel ist die Verzahnung des Sonnenritzels 22 aus der Sonnenwelle 26 gefertigt. Das Sonnenritzel 22 kämmt mit den Planetenrädern 20. Zur Realisierung der Funktion eines Hohlrads kann ein Gehäuse 28 der Getriebeanordnung 12 eine Innenverzahnung 30 aufweisen, mit der die Planetenräder 20 kämmen.

Die Getriebeanordnung 12 umfasst außerdem ein als Antriebszahnrad 32 ausgebildetes Antriebselement 33. Das Antriebszahnrad 32 ist als Doppelzahnrad mit einem ersten Zahnkranz 32a und einem mit dem ersten Zahnkranz 32a drehfest verbundenen zweiten Zahnkranz 32b ausgebildet. Der zweite Zahnkranz 32b weist einen kleineren Durchmesser als der erste Zahnkranz 32a auf. Wie insbesondere aus Fig. 2 ersichtlich ist, kämmt der erste Zahnkranz 32a mit einem Ausgangsritzel 34 des antreibenden DC-Motors 14. Aufgrund des Durchmesserverhältnisses des ersten Zahnkranzes 32a zu dem Ausgangsritzel 34 findet dabei eine Übersetzung ins Langsame statt. Der zweite Zahnkranz 32b kämmt mit einem auf der Sonnenwelle 26 angeordneten Sonnenrad 35. Das Sonnenrad 35 ist drehfest auf der Sonnenwelle 26 angeordnet. Der zweite Zahnkranz 32b weist einen kleineren Durchmesser als das Sonnenrad 35 auf, sodass eine weitere Übersetzung ins Langsame realisiert wird. Der Antrieb des Planetengetriebes erfolgt damit über die Sonnenwelle 26 und das Sonnenritzel 22.

Die Getriebeanordnung 12 umfasst ferner ein im in Fig. 1 und 2 gezeigten ersten Ausführungsbeispiel durch die Sonnenwelle 26 gebildetes erstes Abtriebselement 36, ein durch den Planetenträger 18 gebildetes zweites Abtriebselement 38. Im Betrieb der Getriebeanordnung 12 kann an der Sonnenwelle 26 eine Drehzahl und ein Drehmoment abgegriffen werden, die sich jeweils von der Drehzahl und dem Drehmoment, die an dem Planetenträger 18 abgreifbar sind, unterscheiden. Dadurch weist gegenüber dem Antriebselement 33 das erste Abtriebselement 36 ein von dem zweiten Abtriebselement 38 verschiedenes Übersetzungsverhältnis auf. Die Getriebeanordnung 12 ist dabei so konfiguriert, dass die Sonnenwelle 26 im Betrieb eine höhere Drehzahl und ein geringeres Drehmoment als der Planetenträger 18 aufweist. Außerdem sind die Sonnenwelle 26 und der Planetenträger 18 derart mit dem Antriebszahnrad 32 gekoppelt, dass sie dieselbe Drehrichtung aufweisen.

Die Getriebeanordnung 12 umfasst darüber hinaus ein in den Fig. 1 bis 3 gezeigtes Getriebeausgangselement 40. Die Sonnenwelle 26 ist durch eine in Fig. 1 und 2 gezeigte, als drehmomentbetätigte Kupplung ausgebildete erste Kupplung 42 mit dem Getriebeausgangselement 40 koppelbar. Der Planetenträger 18 ist durch eine als Rollenfreilauf 44 und damit drehrichtungsbetätigte zweite Kupplung 46 mit dem Getriebeausgangselement 40 koppelbar. Insbesondere um eine Wirkverbindung mit beispielsweise einer Bremsbacke herstellen zu können, weist das Getriebeausgangselement 40 eine Keilverzahnung 48 auf.

Die erste Kupplung 42 weist einen ersten Antriebskörper 50 und einen ersten Abtriebskörper 52 auf, wobei der Abtriebskörper 52 durch das Getriebeausgangselement 40 gebildet ist. Der Antriebskörper 50 ist als Zahnscheibe 54 ausgebildet, die in axialer Richtung ein Zahnprofil aufweist. Das Getriebeausgangselement 40 weist auf einer der Zahnscheibe 54 zugewandten Stirnfläche 56 eine mit der Zahnscheibe 54 in Eingriff bringbare Kontur auf. Die Zahnscheibe 54 ist drehfest mit der Sonnenwelle 26 verbunden und durch ein als Federscheibe 57 ausgebildetes Federelement 58 gegen das Getriebeausgangselement 40 vorgespannt. Dadurch kann die erste Kupplung 42 das Getriebeausgangselement 40 mittels einer kraft- und formschlüssigen Verbindung mit der Sonnenwelle 26 koppeln. Die Anordnung wird mittels eines Sicherungsrings 59a, der in die Sicherungsnut 59b eingreift, in axialer Richtung auf der Sonnenwelle 26 gehalten. Durch die Vorspannung und damit insbesondere durch die Wahl des Federelements 58 kann eine Drehmomentgrenze eingestellt werden, ab der die erste Kupplung 42 das Getriebeausgangselement 40 von der Sonnenwelle 26 entkoppelt.

Die zweite Kupplung 46 ist im vorliegenden Ausführungsbeispiel als Rollenfreilauf 44 ausgebildet. Der Rollenfreilauf 44 weist einen zweiten Antriebskörper 62 und einen zweiten Abtriebskörper 64 auf, wobei der zweite Antriebskörper 62 durch den Planetenträger 18 gebildet ist und der zweite Abtriebskörper 64 durch das Getriebeausgangselement 40 gebildet ist. Der erste Abtriebskörper 52 der ersten Kupplung 42 und der zweite Abtriebskörper 64 der zweiten Kupplung 46 sind damit identisch.

Wie insbesondere in Fig. 3 dargestellt ist, weist der Rollenfreilauf 44 Rollkörper 66 auf, die im entkoppelten Zustand an dem Planetenträger 18 abrollen und im gekoppelten Zustand von Klemmfedern 68 ausgerückt werden und eine kraftschlüssige Verbindung zwischen dem Getriebeausgangselement 40 und dem Planetenträger 18 herstellen. Dadurch kann ein verzögerungsfreier Schaltvorgang von der Kopplung der Sonnenwelle 26 mit dem Getriebeausgangselement 40 zur Kopplung des Planetenträgers 18 mit dem Getriebeausgangselement 40 realisiert werden.

Das Getriebeausgangselement 40 kann in einer zylindrischen Ausnehmung 70 des Planetenträgers 18 angeordnet sein. Vorzugsweise liegt die Rotationsachse des Getriebeausgangselements 40 damit auf der Rotationsachse 24 der Sonnenwelle 26. Die zylindrische Ausnehmung 70 weist eine Mantelfläche 72 auf, die als antriebsseitige Wirkfläche der zweiten Kupplung 46 ausgebildet ist. Die Rollkörper 66 des Rollenfreilaufs 44 wirken daher unmittelbar mit der Mantelfläche 72 zusammen.

Mit der vorstehend beschriebenen Anordnung des ersten Ausführungsbeispiels sind je nach einer an dem Getriebeausgangselement 40 anliegenden Last und der Drehrichtung der Sonnenwelle 26 und des zweiten Planetenträgers 18 so entweder die Drehzahl und das Drehmoment der Sonnenwelle 26 oder die Drehzahl und das Drehmoment des Planetenträgers 26 auf das Getriebeausgangselement 40 übertragbar. Damit kann das Übersetzungsverhältnis des Getriebeausgangselements 40 zu dem Antriebszahnrad 32 in Abhängigkeit von der an dem Getriebeausgangselement 40 anliegenden Last verändert werden.

Die Funktionsweise des ersten Ausführungsbeispiels der Getriebeanordnung 12 soll insbesondere mit Blick auf Fig. 2 anhand dreier möglicher Betriebszustände beschrieben werden.

In einem ersten möglichen Betriebszustand drehen sich die Sonnenwelle 26 und der Planetenträger in eine erste Drehrichtung. An dem Getriebeausgangselement 40 liegt keine Last an oder eine Last an, die die Drehmomentgrenze der ersten Kupplung 42 nicht übersteigt. Die erste Kupplung 42 koppelt das Getriebeausgangselement 40 mit der Sonnenwelle 26. Der Rollenfreilauf 44 entkoppelt das Getriebeausgangselement 40 von dem Planetenträger 18 und ermöglicht so ein "Überholen" des langsamer drehenden Planetenträgers 18 durch das schneller drehende, weil mit der Sonnenwelle 26 gekoppelte Getriebeausgangselement 40. Das Getriebeausgangselement 40 weist die Drehzahl und das Drehmoment der Sonnenwelle 26 auf. Dieser Betriebszustand kann insbesondere dann auftreten, wenn eine mit dem Getriebeausgangselement 40 in Wirkverbindung stehende Bremsbacke das Lüftspiel einer Bremse, also den Abstand bis zum Kontakt mit der Bremsscheibe durchfährt.

In einem zweiten möglichen Betriebszustand drehen sich die Sonnenwelle 26 und der Planetenträger 18 ebenfalls in die erste Drehrichtung. An dem Getriebeausgangselement 40 liegt eine Last an, die die Drehmomentgrenze der ersten Kupplung 42 übersteigt. Die erste Kupplung 42 entkoppelt das Getriebeausgangselement 40 von der Sonnenwelle 26. Nachdem die Drehzahl des Getriebeausgangselements 40 bis auf die Drehzahl des Planetenträgers 18 abgefallen ist, koppelt der Rollenfreilauf 44 das Getriebeausgangselement 40 mit dem Planetenträger 18. Das Getriebeausgangselement 40 weist damit die Drehzahl und das Drehmoment des Planetenträgers 18 auf. Dieser Betriebszustand kann insbesondere dann auftreten, wenn die mit dem Getriebeausgangselement 40 in Wirkverbindung stehende Bremsbacke an der Bremsscheibe anliegt und gegen die Bremsscheibe gedrückt wird.

In einem dritten möglichen Betriebszustand drehen sich die Sonnenwelle 26 und der Planetenträger 18 in eine zweite, der ersten Drehrichtung entgegengesetzte Drehrichtung. An dem Getriebeausgangselement 40 liegt keine Last an oder eine Last an, die die Drehmomentgrenze der ersten Kupplung 42 nicht übersteigt. Die erste Kupplung 42 könnte das Getriebeausgangselement 40 von daher mit der Sonnenwelle 26 koppeln. Durch das Prinzip des Rollenfreilaufs 44 bedingt, führt die im Vergleich zur Drehzahl des Planetenträgers 18 höhere Drehzahl der Sonnenwelle 26 in der zweiten Drehrichtung zu einem Koppeln des Getriebeausgangselements 40 mit dem Planetenträger 18. In der Folge entkoppelt die erste Kupplung 42 das Getriebeausgangselement 40 von der Sonnenwelle 16. Das Getriebeausgangselement 40 weist die Drehzahl und das Drehmoment des Planetenträgers 18 auf. Dieser Betriebszustand kann insbesondere dann auftreten, wenn sich die mit dem Getriebeausgangselement 40 in Wirkverbindung stehende Bremsbacke von der Bremsscheibe wegbewegt.

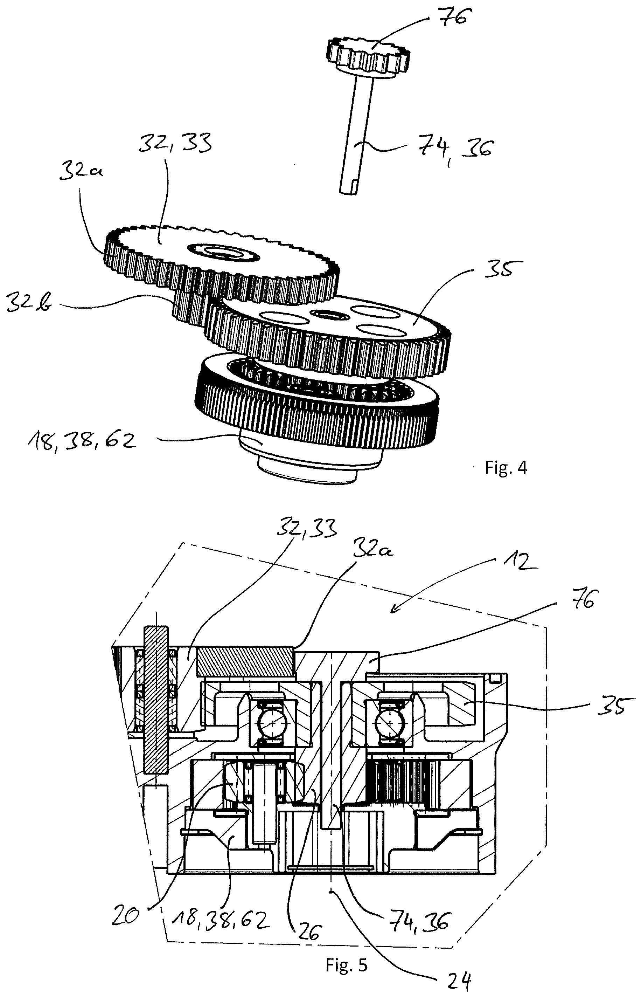

Die Fig. 4 und 5 zeigen Ausschnitte des Bremsaktuators 10 mit einem zweiten Ausführungsbeispiel der Getriebeanordnung 12. Im Unterschied zu dem in den Fig. 1 bis 3 gezeigten Ausführungsbeispiel ist darin das erste Abtriebselement 36 statt durch die Sonnenwelle 26 durch eine von der Sonnenwelle 26 verschiedene Zusatzwelle 74 gebildet. Die Zusatzwelle 74 ist mit einem Zusatzritzel 76 drehfest verbunden, das mit dem ersten Zahnkranz 32a kämmt. Besonders bevorzugt ist das Zusatzritzel 76 zusammen mit der Zusatzwelle 74 einstückig ausgebildet.

Verglichen mit der Sonnenwelle 26 weist die Zusatzwelle gegenüber dem Antriebszahnrad 32 damit ein geringeres Übersetzungsverhältnis auf. Die Zusatzwelle 74 weist dementsprechend eine höhere Drehzahl als die Sonnenwelle 26 auf. Mithilfe der Zusatzwelle 74 kann so ein größerer Drehzahlunterschied zwischen dem ersten Abtriebselement 36 und dem zweiten Abtriebselement 38, also dem Planetenträger 18, realisiert werden. Bezogen auf den Bremsaktuator 10 kann das Lüftspiel damit schneller durchfahren werden.

Wie aus Fig. 5 ersichtlich, ist im zweiten Ausführungsbeispiel die Sonnenwelle 26 als Hohlwelle ausgebildet und die Zusatzwelle 74 in der Sonnenwelle 26 angeordnet. Dabei ist die Zusatzwelle 74 vollständig durch die Sonnenwelle 26 hindurchgeführt, sodass sie die Sonnenwelle 26 entlang deren Rotationsachse 24 in beide Richtungen überragt. Dadurch kann der übrige Aufbau des zweiten Ausführungsbeispiels der Getriebeanordnung 12 und des Bremsaktuators 10 identisch zu dem Aufbau des ersten Ausführungsbeispiels der Getriebeanordnung 12 ausgebildet sein. Das Getriebeausgangselement 40 sowie die erste Kupplung 42 und von dem Planetenträger 18 als Antriebskörper 62 abgesehen auch die zweite Kupplung 46 sind der Übersichtlichkeit halber in Fig. 5 nicht dargestellt.

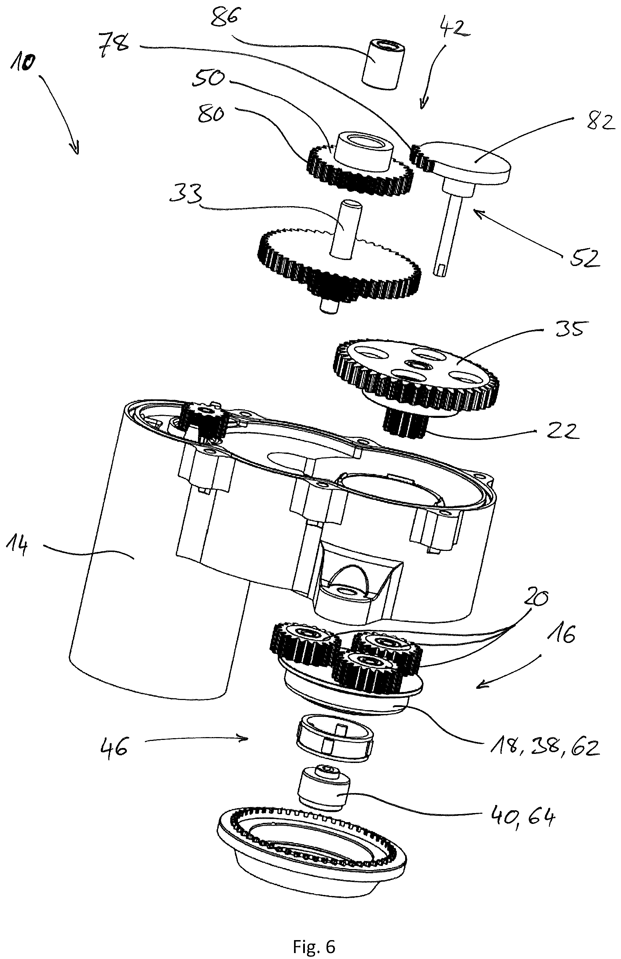

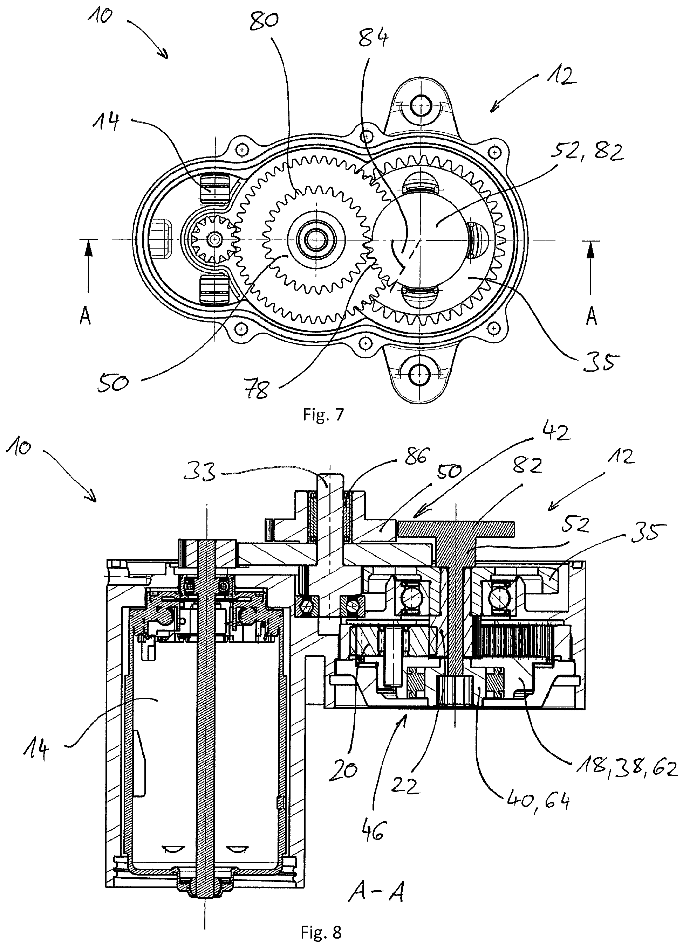

Fig. 6 zeigt einen Bremsaktuator mit einem dritten Ausführungsbeispiel der Getriebeanordnung 12. Darin ist die erste Kupplung 42, im Unterschied zu den zuvor erläuterten Ausführungsbeispielen, als drehwinkelbetätigte Kupplung ausgebildet. Der erste Abtriebskörper 50 weist dabei ein Zahnsegment 78 auf, das drehfest mit dem Getriebeausgangselement 40 gekoppelt ist. Außerdem weist der erste Antriebskörper 50 eine Antriebsverzahnung 80 auf, die, wie in Fig. 7 dargestellt, mit dem Zahnsegment 78 in Eingriff bringbar ist. Das Zahnsegment 78 kann dementsprechend beispielsweise auf dem Umfang eines Zahnsegmentrades 82 über einen Zahnsegmentwinkel 84 von weniger als 360° angeordnet sein. Dadurch kann das Zahnsegment 78 nur innerhalb des Zahnsegmentwinkels 84 mit der Antriebsverzahnung 80 im Eingriff stehen. Darüber hinaus findet zwischen der Antriebsverzahnung 80 und dem Zahnsegment 78 keine Kraftübertragung mehr statt. Der erste Antriebskörper 50 und der erste Abtriebskörper 52 können so voneinander entkoppelt sein. Der erste Antriebskörper 50 kann durch das erste Abtriebselement 36 gebildet sein.

Je nach Drehwinkel des ersten Abtriebskörpers 52 sind so entweder die Drehzahl und das Drehmoment des ersten Abtriebselements 36 oder die Drehzahl und das Drehmoment des zweiten Abtriebselements 38 auf das Getriebeausgangselement 40 übertragbar. Damit kann das Übersetzungsverhältnis des Getriebeausgangselements 40 zu dem Antriebselement 33 in Abhängigkeit von dem Drehwinkel des ersten Abtriebskörpers 52 verändert werden.

Im dritten Ausführungsbeispiel ist das erste Abtriebselement 36 mittels einer in Fig. 6 u. 8 dargestellten dritten Kupplung 86 mit dem Antriebselement 33 koppelbar. Dadurch können der Kraftpfad umfassend das erste Abtriebselement 36 und der Kraftpfad umfassend das zweite Abtriebselement 38 auf Seite des Antriebselements 33 voneinander entkoppelt werden. Bei

Drehung in der ersten Drehrichtung wird die Entkopplung vorzugsweise von der drehrichtungsbetätigten zweiten Kupplung 46 erfüllt, die prinzipiell identisch zum ersten Ausführungsbeispiel ausgebildet ist. Bei Drehung in der zweiten Drehrichtung, die beim dritten Ausführungsbeispiel vorzugsweise vom Getriebeausgangselement 40 aus angetrieben wird, ist die zweite Kupplung 46, durch das Prinzip der Drehrichtungsbetätigung bedingt, geschlossen. Die als drehwinkelbetätigte Kupplung ausgebildete erste Kupplung 42 ist typischerweise nicht in der Lage, bei einem durch die Verlegung der Getriebeanordnung 12 verursachten Drehmomentenanstieg zu öffen, wie das im ersten und zweiten Ausführungsbeispiel geschehen kann. Die Verlegung des Getriebes kann daher durch Vorsehen der dritten Kupplung 86 vermieden werden.

Die in Fig. 6 u. 8 gezeigte dritte Kupplung 86 ist als Freilauf und damit als drehrichtungsbetätigte Kupplung ausgebildet. Dadurch kann in der ersten Drehrichtung das erste Abtriebselement 36 von dem Antriebselement 33 angetrieben werden, in der zweiten Drehrichtung jedoch ein Verlegen der Getriebeanordnung 12 vermieden werden.

Die Funktionsweise des dritten Ausführungsbeispiels der Getriebeanordnung 12 soll insbesondere mit Blick auf Fig. 7 u. 8 anhand dreier möglicher Betriebszustände beschrieben werden.

In einem ersten möglichen Betriebszustand dreht sich das Antriebselement 33 in eine erste Drehrichtung, sodass das drehfest mit dem Antriebselement 33 gekoppelte zweite Abtriebselement 38 sich ebenfalls in einer ersten Drehrichtung dreht. Die dritte Kupplung 86 ist so konfiguriert, dass in der ersten Drehrichtung Drehmoment von dem Antriebselement 33 auf das erste Abtriebselement 36 übertragen wird. Die Antriebsverzahnung 80 des ersten Antriebskörpers 50 steht mit dem Zahnsegment 78 im Eingriff, sodass die erste Kupplung 42 das Getriebeausgangselement 40 mit dem ersten Abtriebselement 36 koppelt. Die zweite Kupplung 46 entkoppelt das Getriebeausgangselement 40 von dem zweiten Abtriebselement 38 und ermöglicht so ein "Überholen" des langsamer drehenden zweiten Abtriebselements 38 durch das schneller drehende Getriebeausgangselement 40. Drehzahl und Drehmoment werden von dem ersten Abtriebselement 36 auf das Getriebeausgangselement 40 übertragen, das sich damit ebenfalls in einer ersten Drehrichtung dreht. Dieser Betriebszustand kann beispielsweise auftreten, wenn eine mit dem Getriebeausgangselement 40 in Wirkverbindung stehende Bremsbacke das Lüftspiel einer Bremse, also den Abstand bis zum Kontakt mit der Bremsscheibe durchfährt.

In einem zweiten möglichen Betriebszustand dreht sich das Antriebselement 33 ebenfalls in die erste Drehrichtung. Das Zahnsegment 78 hat sich soweit fortbewegt, dass zwischen der Antriebsverzahnung 80 und dem Zahnsegment 78 keine Kraftübertragung mehr stattfindet. Die erste Kupplung 42 entkoppelt somit das Getriebeausgangselement 40 von dem ersten Abtriebselement 36. Nachdem die Drehzahl des Getriebeausgangselements 40 mindestens bis auf die Drehzahl des zweiten Abtriebselements 38 abgefallen ist, koppelt die zweite Kupplung 46 das Getriebeausgangselement 40 mit dem zweiten Abtriebselement 38. Drehzahl und Drehmoment werden von dem zweiten Abtriebselement 38 auf das Getriebeausgangselement 40 übertragen. Das Getriebeausgangselement 40 dreht sich in der ersten Drehrichtung. Da das Zahnsegment 78 drehfest mit dem Getriebeausgangselement 40 verbunden ist, dreht sich das Zahnsegment 78 in diesem Betriebszustand mit der Drehzahl des Getriebeausgangselements 40 weiter. Damit kann insbesondere vermieden werden, dass das Zahnsegment 78 an der Antriebsverzahnung 80 streift. Dieser Betriebszustand kann beispielsweise auftreten, wenn die mit dem Getriebeausgangselement 40 in Wirkverbindung stehende Bremsbacke an der Bremsscheibe anliegt und gegen die Bremsscheibe gedrückt wird. Mit der Getriebeanordnung 12 in der zweiten Ausführungsform kann damit das Lüftspiel einer Bremse drehwinkelgesteuert schnell durchfahren werden, um anschließen mit hohem Moment und kleinem Verfahrensweg die Bremsbacke gegen die Bremsscheibe zu drücken.

In einem dritten möglichen Betriebszustand dreht sich das Getriebeausgangselement 40 in einer zweiten, der ersten Drehrichtung entgegengesetzten Drehrichtung. Dieser Betriebszustand kann beispielsweise auftreten, wenn sich die mit dem Getriebeausgangselement 40 in Wirkverbindung stehende Bremsbacke von der Bremsscheibe wegbewegt. Der Antrieb der Getriebeanordnung 12 kann dann vom Getriebeausgangselement 40 aus erfolgen. Dies kann beispielsweise dadurch erreicht werden, dass die Bremse, in der die Getriebeanordnung 12 eingesetzt ist, so konstruiert ist, dass das Entfernen der Bremsbacken von der Bremsscheibe durch den Abbau einer beim Schließen der Bremse in die Bremse eingebrachten Vorspannung angetrieben wird. Durch das Prinzip der drehrichtungsbetätigten zweiten Kupplung 46 bedingt, koppelt die zweite Kupplung 46 in diesem Fall in der zweiten Drehrichtung das Getriebeausgangselement 40 mit dem zweiten Abtriebselement 38. Die entsprechende Drehung wird bis auf das Antriebselement 33 übertragen. Außerdem wird das drehfest mit dem Getriebeausgangselement 40 verbundene Zahnsegment 78 entsprechend zurückbewegt, sodass es wieder mit der Antriebsverzahnung 80 des ersten Antriebskörpers 50 in Eingriff steht. In der Folge wird das zweite Abtriebselement 38 mit einer von dem Antriebselement 33 verschiedenen Drehzahl angetrieben. Die dritte Kupplung 86 entkoppelt dabei das erste Abtriebselement 36 von dem Antriebselement 33, sodass ein Verlegen der Getriebeanordnung 12 vermieden werden kann.

### Bezugszeichenliste

- 10: Bremsaktuator
- 12: Getriebeanordnung
- 14: DC-Motor
- 16: Planetengetriebe
- 18: Planetenträger
- 20: Planetenrad
- 22: Sonnenritzel
- 24: Rotationsachse
- 26: Sonnenwelle
- 27: Gleitlager
- 28: Gehäuse
- 30: Innenverzahnung
- 32: Antriebszahnrad
- 32a: erster Zahnkranz
- 32b: zweiter Zahnkranz
- 33: Antriebselement
- 34: Ausgangsritzel
- 35: Sonnenrad
- 36: erstes Abtriebselement
- 38: zweites Abtriebselement
- 40: Getriebeausgangselement
- 42: erste Kupplung
- 44: Rollenfreilauf
- 46: zweite Kupplung
- 48: Keilverzahnung
- 50: erster Antriebskörper
- 52: erster Abtriebskörper
- 54: Zahnscheibe
- 56: Stirnfläche
- 57: Federscheibe
- 58: Federelement
- 59a: Sicherungsring
- 59b: Sicherungsnut
- 62: zweiter Antriebskörper
- 64: zweiter Abtriebskörper
- 66: Rollkörper
- 68: Klemmfeder
- 70: Ausnehmung
- 72: Mantelfläche
- 74: Zusatzwelle
- 76: Zusatzritzel
- 78: Zahnsegment
- 80: Antriebsverzahnung
- 82: Zahnsegmentrad
- 84: Zahnsegmentwinkel
- 86: dritte Kupplung

## Patentansprüche

1. Getriebeanordnung (12) für einen Bremsaktuator (10), umfassend folgende Merkmale:
• ein Antriebselement (33),
• ein erstes Abtriebselement (36),
• ein zweites Abtriebselement (38), und
• ein Getriebeausgangselement (40),
• wobei die Getriebeanordnung (12) zwei verschiedene Übersetzungsverhältnisse aufweist und so konfiguriert ist, dass das erste Abtriebselement (36) im Betrieb eine höhere Drehzahl und ein geringeres Drehmoment als das zweite Abtriebselement (38) aufweist und dass das erste Abtriebselement (36) und das zweite Abtriebselement (38) derart mit dem Antriebselement (33) gekoppelt sind, dass das erste Abtriebselement (36) und das zweite Abtriebselement (38) dieselbe Drehrichtung aufweisen,
• wobei das erste Abtriebselement (36) durch eine erste Kupplung (42), die einen ersten Antriebskörper (50) und einen ersten Abtriebskörper (52) umfasst, mit dem Getriebeausgangselement (40) koppelbar ist, und
• wobei das zweite Abtriebselement (38) durch eine zweite Kupplung (46), die einen zweiten Antriebskörper (62) und einen zweiten Abtriebskörper (64) umfasst und als drehrichtungsbetätigte Kupplung ausgebildet ist, mit dem Getriebeausgangselement (40) koppelbar ist,
wobei die erste Kupplung (42) als drehmomentbetätigte Kupplung ausgebildet ist,
**dadurch gekennzeichnet, dass**
der erste Antriebskörper (50) drehfest mit dem ersten Abtriebselement (36) verbunden ist und durch ein Federelement (58) gegen den ersten Abtriebskörper (52) vorgespannt ist.

2. Getriebeanordnung nach Anspruch 1,
**dadurch gekennzeichnet, dass**
der erste Abtriebskörper (52) durch das Getriebeausgangselement (40) gebildet ist.

3. Getriebeanordnung nach Anspruch 2,
**dadurch gekennzeichnet, dass**
der erste Antriebskörper (50) der ersten Kupplung (42) als Zahnscheibe (54) ausgebildet ist und das Getriebeausgangselement (40) auf einer der Zahnscheibe (54) zugewandten Stirnfläche (56) eine mit der Zahnscheibe (54) in Eingriff bringbare Kontur aufweist.

4. Getriebeanordnung nach einem der vorhergehenden Ansprüche,
**dadurch gekennzeichnet, dass**
die Getriebeanordnung (12) ein Planetengetriebe (16) umfasst mit
• einem Planetenträger (18),
• mindestens einem Planetenrad (20), das an dem Planetenträger (18) angeordnet ist, und
• einem drehfest mit einer Sonnenwelle (26) verbundenen Sonnenritzel (22), das mit dem mindestens einen Planetenrad (20) kämmt.

5. Getriebeanordnung nach Anspruch 4,
**dadurch gekennzeichnet, dass**
das zweite Abtriebselement (38) durch den Planetenträger (18) gebildet ist.

6. Getriebeanordnung nach Anspruch 5,
**dadurch gekennzeichnet, dass**
der zweite Antriebskörper (62) durch den Planetenträger (18) gebildet ist und/oder der zweite Abtriebskörper (64) durch das Getriebeausgangselement (40) gebildet ist.

7. Getriebeanordnung nach einem der Ansprüche 4 bis 6,
**dadurch gekennzeichnet, dass**
das erste Abtriebselement (36) durch die Sonnenwelle (26) gebildet ist.

8. Getriebeanordnung nach einem der Ansprüche 4 bis 6,
**dadurch gekennzeichnet, dass**
das erste Abtriebselement (36) durch eine von der Sonnenwelle (26) verschiedene Zusatzwelle (74) gebildet ist.

9. Getriebeanordnung nach Anspruch 8,
**dadurch gekennzeichnet, dass**
die Getriebeanordnung (12) so konfiguriert ist, dass die Zusatzwelle (74) eine höhere Drehzahl aufweist als die Sonnenwelle (26).

10. Bremsaktuator (10), insbesondere für eine Betriebsbremse eines Kraftfahrzeugs, mit einer Getriebeanordnung (12 ) nach einem der vorhergehenden Ansprüche.

## Claims

1. Gear arrangement (12) for a brake actuator (10), comprising the following features:
an input element (33),
a first output element (36),
a second output element (38), and
a gear output element (40),
wherein the gear arrangement (12) has two different transmission ratios and is configured such that, during operation, the first output element (36) has a higher rotational speed and a lower torque than the second output element (38), and such that the first output element (36) and the second output element (38) are coupled to the input element (33) in such a manner that the first output element (36) and the second output element (38) have the same direction of rotation,
wherein the first output element (36) is couplable to the gear output element (40) by means of a first clutch (42), which comprises a first input body (50) and a first output body (52), and
wherein the second output element (38) is couplable to the gear output element (40) by means of a second clutch (46), which comprises a second input body (62) and a second output body (64) and is configured as a clutch actuated by the direction of rotation,
wherein the first clutch (42) is configured as a clutch actuated by torque,
**characterised in that** the first input body (50) is connected to the first output element (36) in a rotationally fixed manner and is preloaded against the first output body (52) by a spring element (58).

2. Gear arrangement according to claim 1,
**characterised in that** the first output body (52) is formed by the gear output element (40).

3. Gear arrangement according to claim 2,
**characterised in that** the first input body (50) of the first clutch (42) is configured as a toothed disc (54) and the gear output element (40) has, on an end face (56) facing the toothed disc (54), a contour which can be brought into engagement with the toothed disc (54).

4. Gear arrangement according to any one of the preceding claims,
**characterised in that** the gear arrangement (12) comprises a planetary gear train (16) with
a planet carrier (18),
at least one planet gear (20) which is arranged on the planet carrier (18), and
a sun pinion (22) which is connected to a sun shaft (26) in a rotationally fixed manner and meshes with the at least one planet gear (20).

5. Gear arrangement according to claim 4,
**characterised in that** the second output element (38) is formed by the planet carrier (18).

6. Gear arrangement according to claim 5,
**characterised in that** the second input body (62) is formed by the planet carrier (18) and/or the second output body (64) is formed by the gear output element (40).

7. Gear arrangement according to any one of claims 4 to 6, **characterised in that** the first output element (36) is formed by the sun shaft (26).

8. Gear arrangement according to any one of claims 4 to 6, **characterised in that** the first output element (36) is formed by an additional shaft (74) different from the sun shaft (26).

9. Gear arrangement according to claim 8,
**characterised in that** the gear arrangement (12) is configured such that the additional shaft (74) has a higher rotational speed than the sun shaft (26).

10. Brake actuator (10), in particular for a service brake of a motor vehicle, with a gear arrangement (12) according to any one of the preceding claims.

## Revendications

1. Ensemble (12) engrenage pour un actionneur (10) de frein, comprenant les caractéristiques suivantes :
• un élément (33) d'entraînement,
• un premier élément (36) de sortie,
• un deuxième élément (38) de sortie, et
• un élément (40) de sortie d'engrenage,
• dans lequel l'ensemble (12) engrenage a deux rapports de transmission différents et il est ainsi configuré que le premier élément (36) de sortie a, en fonctionnement, une vitesse de rotation plus grande et un couple plus petit que le deuxième élément (38) de sortie et en ce que le premier élément (36) de sortie et le deuxième élément (38) de sortie sont accouplés à l'élément (33) d'entraînement, de manière à ce que le premier élément (36) d'entraînement et le deuxième élément (38) de sortie aient le même sens de rotation,
• dans lequel le premier élément (36) de sortie peut être accouplé à l'élément (40) de sortie d'engrenage par un premier accouplement (42), qui comprend un premier corps (50) d'entraînement et un premier corps (52) de sortie, et
• dans lequel le deuxième élément (38) d'entraînement peut être accouplé à l'élément (40) de sortie d'engrenage par un deuxième accouplement (46), qui comprend un deuxième corps (62) d'entraînement et un deuxième corps (64) de sortie et qui est constitué sous la forme d'un accouplement pouvant être actionné suivant le sens de rotation,
dans lequel le premier accouplement (42) est constitué sous la forme d'un accouplement pouvant être actionné suivant le couple,
**caractérisé en ce que**
le premier corps d'entraînement (50) est solidaire en rotation du premier élément (36) d'entraînement et est précontraint contre le premier corps (52) de sortie par un élément (58) de ressort.

2. Ensemble engrenage suivant la revendication 1,
**caractérisé en ce que**
le premier corps (52) de sortie est formé par l'élément (40) de sortie d'engrenage.

3. Ensemble engrenage suivant la revendication 2,
**caractérisé en ce que**
le premier corps (50) d'engrenage du premier accouplement (42) est constitué sous la forme d'une rondelle (54) dentée et l'élément (40) de sortie d'engrenage a, sur une surface (56) frontale tournée vers la rondelle (54) dentée, un contour pouvant être mis en prise avec la rondelle (54) dentée.

4. Ensemble engrenage suivant l'une des revendications précédentes,
**caractérisé en ce que**
l'ensemble engrenage (12) comprend un engrenage planétaire (16)
• un porte-planétaire (18),
• au moins une roue (20) planétaire, qui est disposée sur le porte-planétaire (18), et
• un pignon (22) solaire, qui est solidaire d'un arbre (26) solaire et qui engrène dans la au moins une roue (20) planétaire.

5. Ensemble engrenage suivant la revendication 4,
**caractérisé en ce que**
le deuxième élément (38) de sortie est formé par le porte-planétaire (18).

6. Ensemble engrenage suivant la revendication 5,
**caractérisé en ce que**
le deuxième corps (62) d'entraînement est formé par le porte-planétaire (18) et/ou le deuxième corps (64) de sortie est formé par l'élément (40) de sortie d'engrenage.

7. Ensemble engrenage suivant la revendication 4 à 6, **caractérisé en ce que**
le premier élément (36) de sortie est formé par l'arbre (26) solaire.

8. Ensemble engrenage suivant l'une des revendications 4 à 6, **caractérisé en ce que**
le premier élément (36) de sortie est formé par un arbre (74) supplémentaire différent de l'arbre (26) solaire.

9. Ensemble engrenage suivant la revendication 8,
**caractérisé en ce que**
l'ensemble (12) engrenage est ainsi configuré, que l'arbre (74) supplémentaire a une vitesse de rotation plus grande que l'arbre (26) solaire.

10. Actionneur (10) de frein, en particulier pour un frein de fonctionnement d'un véhicule automobile, comprenant un ensemble (12) engrenage suivant l'une des revendications précédentes.
